(19) **Europäisches Patentamt**
**European Patent Office**
**Office européen des brevets**

(11) **EP 4 245 739 A1**

(12) **EUROPEAN PATENT APPLICATION**

(43) Date of publication:
**20.09.2023 Bulletin 2023/38**

(21) Application number: **23161768.9**

(22) Date of filing: **14.03.2023**

(51) International Patent Classification (IPC):
**C04B 35/486** (2006.01)    **C04B 35/645** (2006.01)

(52) Cooperative Patent Classification (CPC):
**C04B 35/486; C04B 35/645; C04B 35/6455;**
C04B 2235/3206; C04B 2235/3208;
C04B 2235/3217; C04B 2235/3225;
C04B 2235/3232; C04B 2235/3272;
C04B 2235/3274; C04B 2235/3275;
C04B 2235/3277; C04B 2235/604; C04B 2235/658;
C04B 2235/661;                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.03.2022   JP 2022042765**

(71) Applicant: **Tosoh Corporation
Yamaguchi 746-8501 (JP)**

(72) Inventors:
• **ITO, Takeshi
Kanagawa, 2521123 (JP)**

• **MATSUMURA, Yuji
Kanagawa, 2521123 (JP)**
• **MORI, Haruki
Kanagawa, 2521123 (JP)**
• **TAKESHIMA, Hikaru
Kanagawa, 2521123 (JP)**
• **SHIMOYAMA, Tomotaka
Kanagawa, 2521123 (JP)**

(74) Representative: **Müller-Boré & Partner
Patentanwälte PartG mbB
Friedenheimer Brücke 21
80639 München (DE)**

(54) **SINTERED BODY AND PRODUCTION METHOD THEREFOR**

(57)    A sintered body comprises zirconia, iron, cobalt and titanium, in which a total iron and cobalt content is more than 0.1 mass% and less than 3 mass% and a titanium content is more than 3 mass%.

EP 4 245 739 A1

(52) Cooperative Patent Classification (CPC): (Cont.)
C04B 2235/663; C04B 2235/765;
C04B 2235/786; C04B 2235/96; C04B 2235/9661

**Description**

BACKGROUND OF THE INVENTION

1. Field of the Invention

The present disclosure relates to zirconia sintered bodies that exhibit a black color. In particular, the present invention relates to a zirconia sintered body that has a strength suitable as exterior members such as decorative members and that exhibits a pitch-black color.

2. Description of the Related Art

Sintered bodies of zirconia ($ZrO_2$ or zirconium dioxide) have excellent mechanical properties and aesthetic quality and their applicability to decorative members and exterior members has been studied. Black zirconia sintered bodies have particularly high aesthetic quality, and, for example, there has been reported a black zirconia sintered body that contains cobalt (Co), iron (Fe) and chromium (Cr) as coloring components (for example, Japanese Unexamined Patent Application Publication No. 2006-342036). Chromium is an element that is difficult to handle. Thus, a zirconia sintered body that contains a mixture of cobalt oxide and iron oxide or $CoFe_2O_4$ as a coloring component (Japanese Unexamined Patent Application Publication No. 07-291630) and a zirconia sintered body that contains a pigment composed of a Co-Zn-Fe-Al complex oxide (Japanese Unexamined Patent Application Publication No. 2007-308338) have been reported as black sintered bodies free of chromium.

Furthermore, the inventors of the present invention have reported a sintered body that exhibits a color tone perceived as black void of hue (hereinafter, this color tone may be referred to as "pitch-black") and that contains decreased amounts of iron and cobalt serving as coloring components (Japanese Unexamined Patent Application Publication No. 2020-023431).

SUMMARY OF THE INVENTION

Compared to the sintered bodies disclosed in Japanese Unexamined Patent Application Publication Nos. 2006-342036, 07-291630 and 2007-308338, the pitch-black sintered body disclosed in Japanese Unexamined Patent Application Publication No. 2020-023431 exhibits a black color of higher aesthetic quality. However, when the sintered body is processed into a member and when a surface after sintering and a surface exposing the inside of the sintered body as a result of processing are visually compared through separated samples, a color tone difference is perceived. Although this color tone difference can be suppressed by taking measures such as extending the sintering time, such measures degrade productivity.

The present disclosure provides at least one selected from a zirconia sintered body that can be produced without degrading productivity and that exhibits the same pitch-black color on the surface and in the inside when visually compared through separated samples, a production method therefor and a use thereof.

The inventors have studied on the color tone of the surface and the inside of a pitch-black zirconia sintered body that contains iron and cobalt as coloring components. As a result, the inventors have found that the color difference (ΔE) between the color tone of the surface and the color tone of the inside of a sintered body can be decreased to a grade-A tolerance or less by controlling the relationship between the coloring components and the components other than the coloring components.

In other words, the present invention is as described in the claims, and the gist of the present disclosure is as follows.

[1] A sintered body comprising: zirconia; iron; cobalt; and titanium, wherein a total iron and cobalt content is more than 0.1 mass% and less than 3 mass% and a titanium content is more than 3 mass%.

[2] The sintered body according to [1] above, wherein a mass ratio of an iron content to a cobalt content is less than 4.

[3] The sintered body according to [1] or [2] above, wherein the iron and the cobalt are contained as a solid solution containing iron and cobalt.

[4] The sintered body according to any one of [1] to [3] above, wherein the zirconia contains at least one element selected from the group consisting of yttrium (Y), calcium (Ca) and magnesium (Mg).

[5] The sintered body according to [4] above, wherein the zirconia contains more than 3 mol% and 10 mol% or less of the at least one element selected from the group consisting of yttrium (Y), calcium (Ca) and magnesium (Mg).

[6] The sintered body according to any one of [1] to [5] above, further comprising alumina.

[7] The sintered body according to any one of [1] to [6] above, wherein a ratio of cobalt regions exceeding 5.0 $\mu m^2$ in an element map obtained with an electron probe microanalyzer under conditions below is 55% or less:

Measurement method: wavelength-dispersive
Accelerating voltage: 15 kV
Irradiation current: 300 nA
Analysis area: 51.2 um × 51.2 um
Number of fields of view: 3 to 5
Measurement sample: sintered body with surface roughness (Ra) ≤ 0.02 um

[8] The sintered body according to any one of[1] to [7] above, wherein the zirconia has an average crystal grain size of 1.2 um or more and 2.5 um or less.

[9] The sintered body according to any one of [1] to [8] above, wherein the sintered body has a biaxial flexure strength of 1000 MPa or more and 1350 MPa or less as measured from a 1 mm-thick sample in accordance with ISO/DIS 6872.

[10] The sintered body according to any one of [1] to [9] above, wherein, a color tone of the sintered body in a L*a*b* color space has a lightness L* of 10 or less, a chromaticity a* of -2.00 or more and 2.00 or less and a chromaticity b* of -2.00 or more and 5.00 or less.

[11] A method for producing the sintered body according to any one of [1] to [10] above, the method comprising a sintering step of sintering, in a reducing atmosphere, a green body that contains an iron source, a cobalt source, a titanium source and zirconia in which a total iron and cobalt content is more than 0.1 mass% and less than 3 mass% and a titanium content is more than 3 mass%.

[12] The method according to [11] above, wherein the sintering is carried out by pressure sintering.

[13] The method according to [12] above, further comprising, before the sintering step, a preliminary sintering step of obtaining a pre-sintered body by sintering the green body in a non-reducing atmosphere.

[14] The method according to any one of [11] to [13] above, further comprising a heat treatment step of heat-treating the sintered body, which has been obtained in the sintering step, in an oxidizing atmosphere at 650°C or higher and 1100°C or lower.

[15] A member comprising the sintered body according to any one of [1] to [10] above.

The present disclosure can provide at least one selected from a zirconia sintered body that can be produced without degrading productivity and that exhibits the same pitch-black color on the surface and in the inside when visually compared through separated samples, a production method therefor and a use thereof.

DESCRIPTION OF THE PREFERRED EMBODIMENTS

A sintered body of the present disclosure will now be described through an example of an embodiment.

A zirconia sintered body according to an embodiment contains iron, cobalt and titanium and has a total iron and cobalt content of more than 0.1 mass% and less than 3 mass% and a titanium content of more than 3 mass% (hereinafter this sintered body may be referred to as a "sintered body of the present embodiment"). Due to these features, when the surface and the inside of this zirconia sintered body are visually compared through separated samples, both exhibit a color tone that is perceived as the same pitch-black. Moreover, such a sintered body can be produced without requiring a long time for sintering.

The sintered body of the present embodiment is a sintered body of zirconia and is a so-called zirconia sintered body (pitch-black zirconia sintered body) having a matrix (main phase or parent phase) constituted by zirconia. The sintered body of the present embodiment is mainly composed of zirconia crystal grains.

The sintered body of the present embodiment is not solely composed of zirconia and also contains iron and cobalt. Iron (Fe) and cobalt (Co) are coloring components that give a black color.

The total cobalt and iron content (hereinafter may also be referred to as the "coloring component content") of the sintered body of the present embodiment is more than 0.1 mass%, and is preferably more than 0.3 mass%, 0.45 mass% or more, more than 0.5 mass% or 0.55 mass% or more. At a coloring component content of 0.1 mass% or less, the sintered body exhibits a grayish color tone. At a coloring component content of more than 0.5 mass%, both the surface and the inside of the sintered body tend to exhibit a pitch-black color, and the color tone difference is decreased. From the viewpoint of stably producing the sintered body of the present embodiment, the coloring component content is preferably less than 3 mass%, 2.5 mass% or less, 1.5 mass% or less, less than 1.0 mass% or 0.75 mass% or less. These upper limits and lower limits may be combined in any way. For example, examples of the particularly preferable coloring component content include more than 0.1 mass% and less than 3 mass%, more than 0.3 mass% and 1.5 mass% or less, 0.45 mass% or more and less than 1.0 mass%, 0.55 mass% or more and less than 1.0 mass% and 0.55 mass% or more and 0.75 mass% or less.

The iron content and the cobalt content of the sintered body of the present embodiment may be any as long as the aforementioned coloring component content is satisfied. For example, the cobalt content of the sintered body of the present embodiment may be 0.05 mass% or more, 0.15 mass% or more or 0.2 mass% or more, and may be 2.9 mass% or less, 2.5 mass% or less, less than 1.5 mass% or 0.5 mass% or less.

The iron content of the sintered body of the present embodiment is, for example, more than 0.05 mass%, 0.4 mass% or more or 0.45 mass% or more, and is, for example, less than 1.5 mass%, 1 mass% or less and 0.8 mass% or less. These upper limits and lower limits of the cobalt content and the iron content may be combined in any way. Preferable examples of the cobalt content include 0.05 mass% or more and less than 1.5 mass% and 0.2 mass% or more and 0.5 mass% or less. Particularly preferable examples of the iron content include more than 0.05 mass% and less than 1.5 mass%, 0.4 mass% or more and 1.0 mass% or less and 0.45 mass% or more and 0.8 mass% or less.

The cobalt content in the present embodiment is the mass ratio of cobalt in terms of $Co_3O_4$ relative to the mass of the sintered body, and the iron content is the mass ratio of iron in terms of $Fe_2O_3$ relative to the mass of the sintered body.

The mass ratio of the iron content to the cobalt content of the sintered body of the present embodiment (the ratio of the mass of iron in terms of $Fe_2O_3$ to the mass of cobalt in terms of $Co_3O_4$ [mass%/mass%]; hereinafter, may also be referred to as the "Fe/Co ratio") is, for example, preferably less than 4 or 3 or less and more than 1 or 1.5 or more. These upper limits and lower limits may be combined in any way. Preferable examples of the Fe/Co ratio include more than 1 and less than 4 and 1.5 or more and 3 or less.

The sintered body of the present embodiment preferably contains iron and cobalt as a solid solution that contains iron and cobalt (hereinafter, may be referred to as a "Co-Fe solid solution"). The Co-Fe solid solution serves as a coloring component that gives a pitch-black color. A sintered body that does not contain a Co-Fe solid solution but only contains iron or cobalt tends to exhibit a color toner different from that of the sintered body of the present embodiment or becomes prone to defects. The Co-Fe solid solution is a complex compound of iron and cobalt and occurs when iron oxide and cobalt oxide are reduced and then re-oxidized. Preferably, the Co-Fe solid solution is contained in the sintered body as grains that have reprecipitated after dissolution into zirconia. When the Co-Fe solid solution is a complex compound in such a state, the Co-Fe solid solution contained in the sintered body is considered to more finely disperse evenly throughout the surface to the inside of the sintered body. The sintered body of the present embodiment may contain at least one selected from cobalt oxide and iron oxide in addition to the Co-Fe solid solution.

For example, the Co-Fe solid solution is contained in the sintered body by taking a form of grains, substantially spherical grains or substantially spherical grains having a diameter of 0.1 um or more and less than 3.5 um.

In the present embodiment, the Co-Fe solid solution can be confirmed by element mapping with an electron probe microanalyzer under the following conditions (hereinafter, this mapping may be simply referred to as the "element mapping").

Measurement method: wavelength-dispersive
Accelerating voltage: 15 kV
Irradiation current: 300 nA
Analysis area: 51.2 um $\times$ 51.2 um
Number of fields of view: 3 to 5
Measurement sample: sintered body with surface roughness (Ra) $\leq$ 0.02 um

Element mapping can be performed by using a common electron probe microanalyzer (for example, EPMA-1610 produced by SHIMADZU CORPORATION). The Co-Fe solid solution can be confirmed by confirming the co-presence of iron and cobalt in the same region in the element map.

In the sintered body of the present embodiment, the ratio of cobalt regions exceeding 5.0 $\mu m^2$ in the element map (hereinafter this ratio may be referred to as the "Co distribution") may be 0% or more, 14% or more, 20% or more, 25% or more or 30% or more, and is preferably 55% or less, 50% or less, 40% or less or 38% or less. These upper limits and lower limits may be combined in any way. The Co distribution is one of the indices of the distribution state of the Co-Fe solid solution. When the coloring component content and the Co distribution of the present embodiment are both achieved, the surface and the inside of the sintered body are both likely to exhibit a color tone (pitch-black) that is perceived as black void of hue, and, in addition, sintering defects, such as cracks, rarely occur. The Co distribution in the sintered body of the present embodiment is, for example, 0% or more and 55% or less, 14% or more and 50% or less, 14% or more and 40% or less, 20% or more and 40% or less or 30% or more and 40% or less. In particular, in a sintered body obtained by using cobalt ferrite as an iron source and a cobalt source, the color difference between the surface and the inside of the sintered body tends to decrease as the value of the Co distribution increases within these Co distribution ranges.

The Co distribution may be determined by analysis using analysis software (for example, EPMA System Ver. 2.14 produced by SHIMADZU CORPORATION) bundled with the electron probe microanalyzer. In the analysis, the element map of cobalt is binarized and the number of regions where the intensity is at least 1.5 times the observed lowest intensity of the characteristic X-ray of cobalt (hereinafter these regions may be referred to as the "detected regions") and the number of regions exceeding 5.0 $\mu m^2$ (hereinafter these regions may be referred to as the "target regions") are counted. Then the ratio of the number of the target regions to the number of detected regions is determined, and the result may be used as the Co distribution.

The sintered body of the present embodiment contains titanium. The titanium content of the sintered body of the present embodiment is more than 3 mass% and is preferably 3.5 mass% or more or more than 4 mass%. In the sintered body of the present embodiment, titanium has substantially no function as a coloring component. It has been known heretofore that a solid solution component such as titania is added to make grains of the Co-Fe solid solution finer. However, it is considered that, in the sintered body of the present embodiment containing titanium in the aforementioned amount, oxygen vacancies are generated due to reduction of titanium during production of the sintered body, and this promotes diffusion of the coloring components and thus causes coloring components to evenly disperse inside the sintered body. As a result, the Co distribution tends to decrease as the titanium content increases. Due to these features, the difference in color tone between the surface and the inside of the sintered body of the present embodiment is reduced. The titanium content is preferably not excessively high compared to the coloring component content and may be 10 mass% or less, 8 mass% or less or 6 mass% or less. The upper limits and lower limits of the titanium content may be combined in any way. Preferable examples of the titanium content include more than 3 mass% and 10 mass% or less, 3.5 mass% or more and 8 mass% or less and more than 4 mass% and 6 mass% or less. The Co distribution tends to decrease with the increasing titanium content.

In the present embodiment, the titanium content is a mass ratio of titanium in terms of $TiO_2$ relative to the mass of the sintered body.

For the same reasons, the titanium content [mass%] relative to the coloring component content [mass%] of the sintered body of the present embodiment (in other words, the ratio of the mass of titanium in terms of $TiO_2$ relative to the total mass of iron in terms of $Fe_2O_3$ and cobalt in terms of $Co_3O_4$, hereinafter this ratio may be referred to as the "Ti ratio") may be 13 or less, 10 or less, 9.5 or less or 8 or less, and may be 2.5 or more, 5 or more, 7.2 or more or 7.5 or more. These upper limits and lower limits may be combined in any way, and examples of the combination include 2.5 or more and 13 or less, 5 or more and 13 or less, 5 or more and 10 or less, 7.2 or more and 9 or less and 7.5 or more and 8.5 or less.

The form of titanium in the sintered body of the present embodiment may be any. Titanium may be contained as titania ($TiO_2$) or may be dissolved in zirconia.

Furthermore, at least part of titanium is preferably dissolved in zirconia.

Since tetravalent titanium ($Ti^{4+}$) is more stable than trivalent titanium ($Ti^{3+}$), the color tone of the sintered body changes less even in high-temperature atmosphere usage when the ratio of tetravalent titanium ratio in titanium is high. Thus, titanium contained in the sintered body of the present embodiment is preferably tetravalent titanium and more preferably is substantially free of trivalent titanium. The sintered body of the present embodiment may contain alumina ($Al_2O_3$) and preferably contains alumina. When alumina is contained, generation of monoclinic crystals tends to be suppressed even at a high coloring component content.

The aluminum content of the sintered body of the present embodiment may be 0 mass% or more, more than 0 mass%, more than 0.25 mass%, 0.3 mass% or more, 0.5 mass% or more or 1.5 mass% or more, and may be 5 mass% or less, 4.5 mass% or less, 4 mass% or less, 3.5 mass% or less or 3 mass% or less. These upper limits and lower limits may be combined in any way. Even when alumina is contained, the color tone of the sintered body of the present embodiment remains substantially unaffected by alumina as long as aluminum content is within this range. Since the color tone rarely becomes lighter even when the sintered body of the present embodiment is prepared by normal pressure sintering, the aluminum content is, for example, preferably 0 mass% or more and 5 mass% or less, 0 mass% or more and 3 mass% or less, more than 0.25 mass% and 5 mass% or less, 0.3 mass% or more and 5 mass% or less, 0.3 mass% or more and 4 mass% or less and 0.5 mass% or more and 3 mass% or less. The aluminum content is more preferably 2 mass% or more and 4.5 mass% or less or 1.5 mass% or more and 3.5 mass% or less.

In the present embodiment, the aluminum content is a mass ratio of aluminum in terms of $Al_2O_3$ relative to the mass of the sintered body.

The sintered body of the present embodiment is preferably free of impurities such as hafnium (Hf) other than inevitable impurities. In the present embodiment, a value, such as density, that is determined from the composition may be obtained by deeming hafnium as zirconium.

The sintered body of the present embodiment is preferably free of any transition metal elements other than iron, cobalt and titanium, and the amount of the transition metal elements other than iron, cobalt and titanium is preferably below the detection limit.

The sintered body of the present embodiment is preferably free of (in other words, contains 0 mass% of) zinc (Zn) and chromium (Cr) since these elements significantly affect the color tone. More preferably, the zinc content and the chromium content are each less than 0.1 mass% or 0.05 mass% or less and yet more preferably are each below the detection limit (for example, 0.005 mass% or less). Examples of each of the zinc content and the chromium content of the sintered body of the present embodiment include 0 mass% or more and less than 0.1 mass% and 0 mass% or more and 0.005 mass% or less (below the detection limit). Further preferably, both of the zinc content and the chromium content are preferably within this range.

Zirconia in the sintered body of the present embodiment preferably contains a stabilizing element, preferably contains at least one element (hereinafter may be referred to as a "stabilizing element") selected from the group consisting of yttrium (Y), calcium (Ca) and magnesium (Mg), and yet more preferably contains yttrium. Furthermore, zirconia may contain stabilizing element and titanium and may contain yttrium and titanium. In the present embodiment, titanium (Ti) is not included in the stabilizing element.

The amount of stabilizing element contained (hereinafter may be referred to as the "stabilizing element content" and when the stabilizing element is yttrium, for example, the amount may be referred to as the "yttrium content" and the same applies to other elements) in zirconia is more than 3 mol%, 3.5 mol% or more, 3.6 mol% or more or 3.8 mol% or more, and is 10 mol% or less, 6 mol% or less or 5 mol% or less. These upper limits and lower limits may be combined in any way. Thus, examples of the yttrium content include more than 3 mol% and 10 mol% or less, 3.5 mol% or more and 6 mol% or less, 3.6 mol% or more and 6 mol% or less and 3.8 mol% or more and 5 mol% or less.

The stabilizing element content in the present embodiment is the ratio [mol%] of the stabilizing element in terms of oxide relative to the total of zirconia and stabilizing elements in terms of oxide. The oxides used in the conversion of the stabilizing elements in the present embodiment are $Y_2O_3$ for yttrium, $CaO$ for calcium and $MgO$ for magnesium.

For example, when the sintered body of the present embodiment is a yttrium-containing zirconia sintered body that contains iron, cobalt, titanium and alumina, the iron content is determined by $\{Fe_2O_3/(Fe_2O_3 + Co_3O_4 + TiO_2 + Al_2O_3 + Y_2O_3 + ZrO_2)\} \times 100$ [mass%], the cobalt content is determined by $\{Co_3O_4/(Fe_2O_3 + Co_3O_4 + TiO_2 + Al_2O_3 + Y_2O_3 + ZrO_2)\} \times 100$ [mass%], the coloring component content is determined by $\{(Fe_2O_3 + Co_3O_4)/(Fe_2O_3 + Co_3O_4 + TiO_2 + Al_2O_3 + Y_2O_3 + ZrO_2)\} \times 100$ [mass%], the titanium content is determined by $\{TiO_2/(Fe_2O_3 + Co_3O_4 + TiO_2 + Al_2O_3 + Y_2O_3 + ZrO_2)\} \times 100$ [mass%], the aluminum content is determined by $\{Al_2O_3/(Fe_2O_3 + Co_3O_4 + TiO_2 + Al_2O_3 + Y_2O_3 + ZrO_2)\} \times 100$ [mass%], the yttrium content is determined by $\{Y_2O_3/(Y_2O_3 + ZrO_2)\} \times 100$ [mol%] and the sintered body mass is determined by $Fe_2O_3 + Co_3O_4 + TiO_2 + Al_2O_3 + Y_2O_3 + ZrO_2$ [g] .

The crystal phase of the sintered body of the present embodiment may have tetragonal zirconia as the main phase, and may include tetragonal zirconia and cubic zirconia. The main phase of the crystal phase is the crystal phase that accounts for the largest fraction in a powder X-ray diffraction (hereinafter may also be referred to as "XRD") pattern measured under the following conditions.

Radiation source: CuKα radiation (λ = 1.5405 Å)
Measurement mode: continuous scan
Step width: 0.02°
Scan speed: 5°/minute
Measurement range: 2Θ = 20° to 80°

It should be noted that, at the iron content and the cobalt content of the sintered body of the present embodiment, the XRD peaks thereof may not be detected in the XRD pattern. The sintered body of the present embodiment may have the same XRD pattern as zirconia.

XRD measurement may be carried out by using a common X-ray diffractometer (for example, MiniFlex produced by RIGAKU Corporation) .

The monoclinic ratio of the sintered body of the present embodiment is more preferably 10% or less, 6.5% or less, 2% or less or 1% or less, and may be 0% or more or 0.5% or more. These upper limits and lower limits may be combined in any way. Thus, examples of the preferable monoclinic ratio include 0% or more and 10% or less, 0.5% or more and 2% or less and 0.5% or more and 1% or less.

The monoclinic ratio is a value determined by the following equation from an XRD pattern of a surface of the sintered body of the present embodiment measured under the aforementioned conditions.

```
Monoclinic ratio (%) = [Im(111) + Im(11-1)] × 100

/[Im(111) + Im(11-1) + It(111) + Ic(111)]
```

In the equation above, Im(111) denotes the area intensity of the (111) plane of monoclinic zirconia, Im(11-1) denotes the area intensity of the (11-1) plane of monoclinic zirconia, It(111) denotes the area intensity of the (111) plane of tetragonal zirconia, and Ic(111) denotes area intensity of the (111) plane of cubic zirconia.

The area intensity of each crystal plane can be obtained by smoothing an XRD pattern, removing the background, and profile-fitting the resulting XRD pattern with a split pseudo-Voigt function. The XRD pattern analysis such as smoothing, the background process, and the area intensity calculation can be performed by using, for example, an analysis program (for example, integrated powder X-ray analysis software PDXL Ver. 2.2 produced by RIGAKU Corporation) bundled with the X-ray diffractometer.

The XRD peaks corresponding to the crystal planes of zirconia in the aforementioned XRD measurement are, for example, XRD peaks that have peak tops at 2Θ described below.

XRD peak corresponding to monoclinic (111) plane: 2Θ = 31 ± 0.5°
XRD peak corresponding to monoclinic (11-1) plane: 2Θ = 28 ± 0.5°
XRD peak corresponding to tetragonal (111) plane: 2Θ = 30 ± 0.5°
XRD peak corresponding to cubic (111) plane: 2θ = 30 ± 0.5°

The XRD peak corresponding to the tetragonal (111) plane and the XRD peak corresponding to the cubic (111) plane are measured as one overlapping peak. Thus, It(111) + Ic(111) in the aforementioned equation may be determined from the area intensity of one XRD peak that has a peak top at 2Θ = 30 ± 0.5°.

Examples of the average crystal grain size of zirconia of the sintered body of the present embodiment (hereinafter, may be simply referred to the "average crystal grain size") include 3.0 um or less, 2.5 um or less, 2.0 um or less and 1.5 um or less, and 0.3 um or more, 0.5 um or more, 1.2 um or more and more than 1.3 um. These upper limits and lower limits may be combined in any way. Examples of the preferable average crystal grain size include 0.3 um or more and 3.0 um or less, 0.5 um or more and 2.5 um or less, 1.2 um or more and 2.5 um or less, 1.2 um or more and 2.0 um or less, more than 1.3 um and 2.5 um or less and more than 1.3 um and 2.0 um or less.

In the present embodiment, the average crystal grain size may be determined with a scanning microscope by observing a surface of the sintered body of the present embodiment at a magnification of 15,000x, extracting 200 or more and preferably 250 ± 50 zirconia crystal grains from the obtained SEM observation image, measuring the crystal grain sizes thereof by an intercept method (k = 1.78), and averaging the results. In a SEM observation image of the sintered body of the present embodiment, the zirconia crystal grains can be distinguished from other grains, such as Co-Fe solid solution grains and alumina grains, and pores by the shade.

The sintered body of the present embodiment is a zirconia sintered body that exhibits a black color (black zirconia sintered body) and, in particular, is a zirconia sintered body that exhibits a pitch-black color (pitch-black zirconia sintered body).

The color tone of the sintered body of the present embodiment in the L*a*b* color space preferably has a lightness L* of 10 or less, a chromaticity a* of -2.00 or more and 2.00 or less and a chromaticity b* of -2.00 or more and 5.00 or less. The lightness is an index of brightness and takes a value of 0 or more and 100 or less.

A particularly preferable color tone of the sintered body of the present embodiment is any combination of the lightness L* and chromaticities a* and b* described below. These upper limits and lower limits may be combined in any way.

Lightness L*: 0 or more or 1.0 or more and
9.0 or less, 5.5 or less or less than 3.0. Chromaticity a*: -3.00 or more, -0.50 or more or 0 or more and
2.00 or less, 1.20 or less, 1.00 or less or 0.50 or less
Chromaticity b*: -2.00 or more, -1.00 or more or 0 or more and
4.00 or less, 1.50 or less, 1.00 or less or 0.5 or less

The sintered body of the present embodiment is to exhibit a pitch-black color; however, the following color tones are particularly preferable.

Lightness L*:      0.5 or more or 1.0 or more and less than 3.0 or 2.0 or less
Chromaticity a*:   0 or more or 0.05 or more and 1.00 or less or 0.50 or less
Chromaticity b*:   0 or more or 0.01 or more and 1.00 or less or 0.50 or less

The color tone in the L*a*b* color space can be determined by measuring a sintered body having a surface roughness (Ra) of 0.02 um or less in accordance with JIS Z 8722. The color tone may be determined by SCE with which specular light is excluded and diffuse light is measured. A specific color tone measurement method may be the following method using a common colorimeter (for example, Spectrophotometer SD3000 produced by NIPPON DENSHOKU INDUSTRIES Co., Ltd.).

Measurement method: SCE
Light source: D65
Viewing angle: 10°
Background: white

In this sintered body of the present embodiment, the difference in color tone between the surface and the inside of the sintered body is very small. Due to this feature, when a surface exposing the inside of the sintered body by processing and a surface of the sintered body are visually compared through separated samples, both samples exhibit the same color tone.

For example, according to the sintered body of the present embodiment, the color tone difference ($\Delta E^*$) between the color tone of the sintered body having a sample thickness of 3 mm and the color tone of the sintered body having a sample thickness of 2 mm is 3.2 or less or even 3 or less as determined from the equation below. The color tone difference is preferably as small as possible; however, it is sufficient if the color tone difference is such that samples exhibit the same color tone in visual comparison of separated samples. For example, $\Delta E^*$ may be 1.6 or more, 2.0 or more or 2.5 or more. Examples of the preferable color tone difference ($\Delta E^*$) include 1.6 or more and 3.2 or less, 2.0 or more and 3.2 or less, 2.5 or more and 3.2 or less and 2.5 or more and 3 or less.

$$\Delta E^* = \{(L_1{}^* - L_2{}^*)^2 + (a_1{}^* - a_2{}^*)^2 + (b_1{}^* - b_2{}^*)^2\}^{1/2}$$

In the equation above, $L_1{}^*$, $a_1{}^*$ and $b_1{}^*$ respectively represent $L^*$, $a^*$ and $b^*$ of the surface of a sintered body sample having a thickness of 3 mm. $L_2{}^*$, $a_2{}^*$ and $b_2{}^*$ respectively represent $L^*$, $a^*$ and $b^*$ of the surface of a sintered body having a thickness of 2 mm obtained by polishing the surface of the sintered body sample having a thickness of 3 mm.

Here, $\Delta E^* = 1.6$ to 3.2 corresponds to the grade-A tolerance, and is the color tone difference that is generally deemed to be the same color. Meanwhile, $\Delta E^* = 3.2$ to 6.5 corresponds to the grade-B tolerance, and is the color tone difference that is deemed to be different colors although the impression is the same.

The sintered body of the present embodiment more preferably has a biaxial flexure strength of 1000 MPa or more or 1010 MPa or more as measured in accordance with ISO/DIS 6872 using a sample having a thickness of 1 mm (hereinafter, this biaxial flexure strength measured as such may be simply referred to as the "biaxial flexure strength") From the viewpoint of processability, the biaxial flexure strength may be 3000 MPa or less, 2500 MPa or less, 1500 MPa or less, 1350 MPa or less or 1100 MPa or less. These upper limits and lower limits may be combined in any way. The biaxial flexure strength of the sintered body of the present embodiment is, for example, 1000 MPa or more and 3000 MPa or less, 1000 MPa or more and 1500 MPa or less or 1010 MPa or more and 1300 MPa or less, and, from the viewpoint of processability, the biaxial flexure strength is preferably 1000 MPa or more and 1350 MPa or less, 1000 MPa or more and 1200 MPa or less or 1000 MPa or more and 1100 MPa or less.

The sintered body of the present embodiment can be used in known applications of zirconia sintered bodies, and may be formed into a member that contains such a sintered body. Examples of the applications include at least one selected from the group consisting of structure members, decorative members, exterior members, optical members and dentistry materials, and the sintered body can be used in at least one selected from exterior members and decorative members or at least one selected from exterior members and decorative members of cellular electronic devices.

Next, a method for producing the sintered body of the present embodiment is described.

The sintered body of the present embodiment may be produced by any method as long as a sintered body having the aforementioned features is obtained. An example of a preferable method for producing the sintered body of the present embodiment is a method that has a sintering step of sintering, in a reducing atmosphere, a green body that contains an iron source, a cobalt source, a titanium source and zirconia in which the total iron and cobalt content is more than 0.1 mass% and less than 3 mass% and the titanium content is more than 3 mass%. In this manner, the sintered body of the present embodiment can be produced at high productivity.

The green body that is sintered in a reducing atmosphere in the sintering step contains an iron source, a cobalt source, a titanium source and zirconia in which the total iron and cobalt content is more than 0.1 mass% and less than 3 mass% and the titanium content is more than 3 mass%.

The iron source may be any iron (Fe)-containing compound and is preferably an iron oxide. Specific examples of the iron source include at least one selected from the group consisting of iron(III,II) oxide ($Fe_3O_4$), iron(III) oxide ($Fe_2O_3$), iron(II) oxide (FeO), iron oxyhydroxide (FeOOH), iron hydroxide (FeOH), iron nitrate ($Fe(NO_3)_2$), iron chloride (FeCl) and iron sulfate ($FeSO_4$); however, the iron source is preferably at least one selected from the group consisting of iron(III,II) oxide, iron(III) oxide, iron(II) oxide and iron oxyhydroxide, is more preferably at least one selected from iron(III) oxide and iron(II) oxide and is yet more preferably iron(III) oxide. The iron source may be an iron-containing complex oxide, may be, for example, at least one selected from cobalt ferrite ($CoFe_2O_4$) and hercynite ($FeAl_2O_4$) and is preferably cobalt ferrite.

The cobalt source may be any cobalt (Co)-containing compound and is preferably cobalt oxide. Specific examples of the cobalt source include at least one selected from the group consisting of tricobalt tetraoxide ($Co_3O_4$), cobalt(III) oxide ($Co_2O_3$), cobalt(II) oxide (CoO), cobalt oxyhydroxide (CoOOH), cobalt hydroxide ($Co(OH)_2$), cobalt nitrate ($Co(NO_3)_2$), cobalt chloride ($CoCl_2$) and cobalt sulfate ($CoSO_4$); however, the cobalt source is preferably at least one selected from the group consisting of tricobalt tetraoxide, cobalt(III) oxide, cobalt(II) oxide and cobalt oxyhydroxide, more preferably at least one selected from cobalt(III) oxide and cobalt(II) oxide and yet more preferably cobalt(II) oxide.

The cobalt source may be a cobalt-containing complex oxide, may be, for example, at least one selected from cobalt ferrite ($CoFe_2O_4$) and cobalt aluminate ($CoAl_2O_4$) and is preferably $CoFe_2O_4$.

To even out the iron and cobalt distributions in the sintered body, the iron source and the cobalt source may be a complex oxide that contains iron and cobalt or may be cobalt ferrite. Note that when the iron source and the cobalt source are aluminum-containing complex oxides such as $FeAl_2O_4$ and $CoAl_2O_4$, the color tone of the obtained sintered body tends to be lighter. Thus, when the iron source and the cobalt source are aluminum-containing complex oxides, the aluminum-containing complex oxides may be used in combination with an iron source or a cobalt source other than the aluminum-containing complex oxides.

The iron source and the cobalt source are preferably iron oxide and cobalt oxide since the color tone difference ($\Delta E^*$) of the sintered body obtained tends to be small, more preferably at least one selected from the group consisting of iron oxide ($Fe_3O_4$), iron oxide ($Fe_2O_3$), iron oxide ($FeO$) and iron oxyhydroxide and at least one selected from the group consisting of tricobalt tetraoxide ($Co_3O_4$), cobalt oxide ($Co_2O_3$) and cobalt oxide ($CoO$), more preferably at least one selected from iron oxide ($Fe_2O_3$) and iron oxide ($FeO$) and at least one selected from the group consisting of tricobalt tetraoxide ($Co_3O_4$), cobalt oxide ($Co_2O_3$) and cobalt oxide ($CoO$) and yet more preferably iron oxide ($Fe_2O_3$) and tricobalt tetraoxide ($Co_3O_4$).

The titanium source may be any titanium (Ti)-containing compound and is preferably titanium oxide. Specific examples of the titanium source include at least one selected from the group consisting of titanium oxide (titania, $TiO_2$), titanium hydroxide, titanium chloride and titanium tetraisopropoxide. At least one selected from titanium oxide and titanium hydroxide is preferable and titanium oxide is more preferable.

Zirconia is preferably stabilizing element-containing zirconia, is preferably zirconia containing at least one selected from the group consisting of yttrium, calcium and magnesium and is yet more preferably yttrium-containing zirconia. The amount of stabilizing element in zirconia is 2 mol% or more, 3 mol% or more, more than 3 mol%, 3.5 mol% or more, 3.8 mol% or more or 3.9 mol% or more, and is 10 mol% or less, 6 mol% or less, 5.5 mol% or less or 5 mol% or less, for example. These upper limits and lower limits may be combined in any way. Examples of the preferable stabilizing element content include more than 3 mol% and 10 mol% or less, 3.5 mol% or more and 6 mol% or less and 3.8 mol% or more and 5 mol% or less.

The green body may contain an aluminum source and preferably contains an aluminum source. The aluminum source may be any aluminum (Al)-containing compound. Examples thereof include at least one selected from the group consisting of alumina ($Al_2O_3$), aluminum hydroxide ($Al(OH)_3$), aluminum chloride ($AlCl_3$), aluminum isopropoxide ($C_9H_{21}O_3Al$) and aluminum nitrate ($Al(NO_3)_3$). At least one selected from alumina and aluminum hydroxide is preferable and alumina is more preferable.

The green body may contain a stabilizing element. The stabilizing element source (hereinafter, if the stabilizing element is yttrium, the source thereof is referred to as the "yttrium source" and the same applies to other elements) may be any compound containing a stabilizing element. The stabilizing element source is, for example, a compound containing at least one selected from the group consisting of yttrium, calcium and magnesium and is preferably a compound containing yttrium.

The yttrium source may be any compound containing yttrium. Examples of the yttrium source include at least one selected from the group consisting of yttrium oxide (yttria), yttrium chloride and yttrium hydroxide, and the yttrium source is preferably at least one selected from yttria and yttrium chloride.

Examples of the calcium source include at least one selected from the group consisting of calcium oxide (calcia), calcium chloride and calcium hydroxide, and the calcium source is preferably at least one selected from calcia and calcium chloride.

Examples of the magnesium source include at least one selected from the group consisting of magnesium oxide (magnesia), magnesium chloride and magnesium hydroxide, and the magnesium source is preferably at least one selected from magnesia and magnesium chloride.

For high strength, the green body preferably contains a resin and more preferably contains an acrylic resin. The acrylic resin may be any acrylic resin used as a binder for ceramics, and examples thereof include at least one selected from the group consisting of AS-1100, AS-1800 and AS-2000 (all are the names of products from TOAGOSEI CO., LTD.).

The green body is preferably free of impurities other than inevitable impurities, and is particularly preferably free of zinc and chromium. For example, the zinc content and the chromium content of the green body are each 0 mass% or more and less than 0.1 mass%. Similarly, the green body is preferably free of erbium and cerium, and the contents thereof are each preferably below the detection limit (0 mol%). For example, considering the measurement error etc., the contents are each less than 1 mol%.

The amounts of the iron source, the cobalt source, the titanium source and zirconia and optionally the alumina source and the stabilizing element source contained in the green body may be the same as the iron content, the cobalt content, the coloring component content, the titanium content, the zirconia content, the alumina content and the stabilizing element content of the aforementioned sintered body.

The green body may have any desired shape suited for the purpose, and examples of the shape include at least one selected from the group consisting of a disk shape, a column shape, a cubic shape, a cuboid shape, a polyhedron shape, a shape close to a polyhedron shape, a plate shape, a spherical shape and a shape close to a spherical shape, a container shape and other shapes of members. In order for the shape to be suitable for processing into a member, the thickness of the green body (the maximum thickness) is preferably 2 mm or more and 5 mm or less.

The green body may be produced by any method. An example of the method is a method that includes a compacting step of compacting a composition that contains an iron source, a cobalt source, a titanium source and zirconia in which the total iron and cobalt content is more than 0.1 mass% and less than 3 mass% and the titanium content is more than 3 mass%.

The composition that contains an iron source, a cobalt source, a titanium source and zirconia in which the total iron and cobalt content is more than 0.1 mass% and less than 3 mass% and the titanium content is more than 3 mass% may be prepared by mixing starting materials such as the iron source. Mixing may be conducted by any mixing method that can evenly mix the starting materials such as an iron source. A preferable example of the mixing method is to wet-mix powders of starting materials. Specific examples of the device used for wet mixing include at least one selected from the group consisting of a ball mill, a bead mill and a stirring mill. Mixing is preferably conducted using at least one selected from a ball mill and a bead mill and more preferably conducted by using a ball mill with zirconia balls having a diameter of 1.0 mm or more and 10.0 mm or less as grinding media. In the present embodiment, the powders of starting materials are preferably ground during wet mixing.

Compacting may be performed by any compacting method with which a green body of a desired shape can be obtained. Examples of the compacting method include at least one selected from uniaxial pressing, cold isostatic pressing, slip casting and injection molding. A preferable compacting method is at least one selected from uniaxial pressing and cold isostatic pressing, and a more preferable compacting method is uniaxial pressing followed by cold isostatic pressing. An example of the condition of the uniaxial pressing is 20 MPa or higher and 70 MPa or lower and an example of the condition of the cold isostatic pressing is 150 MPa or higher and 250 MPa or lower.

In the sintering step of the production method of the present embodiment, the green body is sintered in a reducing atmosphere. By sintering the green body in a reducing atmosphere, formation of solid solution and precipitation of cobalt and iron progress simultaneously, and since titanium becomes reduced, sintering progresses while the coloring components, cobalt and iron, diffuse inside the green body. In contrast, sintering in an oxidizing atmosphere only rarely generates Co-Fe solid solution and even if the Co-Fe solid solution is generated, the diffusibility is likely to be low. As a result, differences in color tone, variation in color tone or the like occurs in the sintered body, the surface of the sintered body is likely to exhibit a different color tone from the inside of the sintered body, and thus the sintered body of the present embodiment is not stably obtained.

The reducing atmosphere is preferably a weakly reducing atmosphere. Examples of the weakly reducing atmosphere include an atmosphere that uses at least one selected from a reducing gas and a sintering furnace equipped with a reducing member and at least one selected from a reducing gas and a reducing heating element. An example of the reducing gas is a gas that contains at least one selected from hydrogen and carbon monoxide. Examples of the reducing member include at least one selected from a reducing heating element and a reducing heat insulator. An example of the reducing heating element is a heating element made of carbon (carbon heater).

An example of the preferable reducing atmosphere in the present embodiment is a weakly reducing atmosphere, specifically, an atmosphere where a reducing heating element is used in an inert gas atmosphere. Another example is an atmosphere that uses a carbon heating element in an argon atmosphere or a nitrogen atmosphere.

The sintering method involves causing the green body to sinter, and is, for example, at least one selected from the group consisting of normal pressure sintering, pressure sintering and vacuum sintering. In order to increase the productivity of the sintered body of the present embodiment, the sintering method in the sintering step is preferably pressure sintering. Pressure sintering is preferably at least one selected from hot pressing and hot isostatic pressing (also referred to as "HIP" hereinafter) and is more preferably HIP.

In the present embodiment, the "normal pressure sintering" refers to a sintering method that involves heating without applying external force to the green body during sintering, and the "pressure sintering" refers to a sintering method that involves heating while applying external force to the green body during sintering.

The sintering temperature is, for example, 1300°C or higher, higher than 1400°C or 1450°C or higher and 1700°C or lower, 1675°C or lower or 1600°C or lower. These upper limits and lower limits may be combined in any way. Examples of the sintering temperature include 1300°C or higher and 1700°C or lower, higher than 1400°C and 1700°C or lower, 1450°C or higher and 1675°C or lower and 1450°C higher and 1600°C or lower.

Examples of the preferable sintering conditions are as follows.

Sintering method: HIP
Sintering atmosphere: argon atmosphere or nitrogen atmosphere, preferably argon atmosphere
Sintering temperature: 1300°C or higher or 1450°C or higher and

1700°C or lower or 1675°C or lower
Sintering pressure: 50 MPa or higher or 100 MPa or higher and
200 MPa or lower or 175 MPa or lower
Heating element: carbon heater

The retention time at the sintering temperature may be appropriately set by taking into account the size of the green body subjected to the sintering step and the performance of the sintering furnace to be used. For example, the retention time at the sintering temperature described above is 0.5 hours or longer and 5 hours or shorter.

When sintering involves pressure sintering, a preliminary sintering step of sintering the green body in a non-reducing atmosphere to obtain a pre-sintered body is preferably included.

The sintering atmosphere of the preliminary sintering step may be any non-reducing atmosphere, may be an oxidizing atmosphere or an inert atmosphere and is preferably an oxidizing atmosphere, in particular, an air atmosphere.

The preliminary sintering method may be any method that allows sintering, but is preferably normal pressure sintering and more preferably normal pressure sintering in an air atmosphere.

Examples of the conditions of the preliminary sintering are as follows.

Preliminary sintering method: normal pressure sintering
Preliminary sintering atmosphere: air atmosphere
Preliminary sintering temperature: 1300°C or higher or
1350°C or higher and
1500°C or lower, 1450°C or lower or 1400°C or lower

The preliminary sintering time may be appropriately set by taking into account the size of the green body subjected to the preliminary sintering step and the performance of the sintering furnace to be used. For example, the retention time at the preliminary sintering temperature described above is 0.5 hours or longer and 5 hours or shorter.

These upper limits and lower limits of the preliminary sintering temperature may be combined in any way. Examples of the preliminary sintering temperature include 1300°C or higher and 1500°C or lower and 1350°C or higher and 1400°C or lower.

When the production method of the present embodiment includes a preliminary sintering step, a pre-sintered body may be subjected to the sintering step instead of the green body (powder compact).

The production method of the present embodiment may include a heat treatment step of heat-treating the sintered body, which has been obtained in the sintering step, in an oxidizing atmosphere at a temperature of 650°C or higher and 1100°C or lower, and preferably includes this heat treatment step. By performing the heat treatment step, remaining trivalent titanium is oxidized and titanium in the sintered body is likely to become tetravalent.

The heat treatment method may be any heat treatment in an oxidizing atmosphere. For the sake of simplicity, the heat treatment is preferably a method of heating the sintered body at a temperature equal to or lower than the sintering temperature without applying external force to the sintered body during the heat treatment (hereinafter, also referred to as the "normal pressure firing") and is more preferably normal pressure firing in an air atmosphere.

The heat treatment temperature is 650°C or higher, 700°C or higher or 800°C or higher and 1050°C or lower, 1000°C or lower or 950°C or lower. These upper limits and lower limits may be combined in any way.

Examples of the particularly preferable conditions of the heat treatment step are as follows.

Heat treatment method: normal pressure firing
Heat treatment atmosphere: air atmosphere
Heat treatment temperature: 700°C or higher and 1050°C or lower, preferably 800°C or higher and 950°C or lower

The heat treatment time may be appropriately set by taking into account the size of the sintered body subjected to the heat treatment step and the performance of the heat treatment furnace to be used. For example, the duration of the aforementioned heat treatment temperature is 1 hour or longer and 48 hours or shorter or 1 hour or longer and 10 hours or shorter.

In the present embodiment, the time required for the sintering step (when at least one selected from the preliminary sintering step and the heat treatment step is included, the total time required for the preliminary sintering step, the sintering step and the heat treatment step) may be any length of time suitable for industrial production, and is preferably 60 hours or shorter, 55 hours or shorter or 48 hours or shorter and 20 hours or longer or 30 hours or longer. These upper limits and lower limits may be combined in any way. Examples of the time required for the sintering step include 20 hours or longer and 60 hours or shorter and 30 hours or longer and 48 hours or shorter.

The sintering step particularly preferably includes a preliminary sintering step of obtaining a pre-sintered body by subjecting a green body to normal pressure sintering in an air atmosphere at 1350°C or higher and 1450°C or lower, a pressure sintering step of obtaining a HIP-processed body by subjecting the pre-sintered body to hot isostatic pressing in an argon atmosphere at 1450°C or higher and 1675°C or lower at 100 MPa or higher and 175 MPa or lower with a carbon heater serving as a heating element and a heat treatment step of subjecting the HIP-processed body to normal pressure firing in an air atmosphere at 800°C or higher and 950°C or lower.

EXAMPLES

The present disclosure will now be described through examples. These examples do not limit the scope of the present disclosure.

XRD measurement

Crystal phases of a sintered body sample were measured with a common X-ray diffractometer (name: MiniFlex produced by RIGAKU Corporation).

Radiation source: CuKα radiation (λ = 1.5405 Å)
Measurement mode: continuous scan
Step width: 0.02°
Scan speed: 5°/minute
Measurement range: 2Θ = 20° to 80°

The monoclinic ratio was determined from the aforementioned equation and the obtained XRD pattern.

Co distribution

A backscattered electron image was observed and an element map was obtained under the following conditions using EPMA device (device name: EPMA-1610 produced by

SHIMADZU CORPORATION).
Measurement method: wavelength-dispersive
Accelerating voltage: 15 kV
Irradiation current: 300 nA
Analysis area: 51.2 um × 51.2 um
Number of fields of view: 3

By using analysis software (product name: EPMA system Ver. 2.14, produced by SHIMADZU CORPORATION) bundled with EPMA-1610, the obtained element map was binarized and the number of regions where the cobalt characteristic X-ray intensity was at least 1.5 times the cobalt characteristic X-ray intensity of the background was counted. In binarizing, assuming that the intensity of the mapping results was 120 counts, the sites where no grains were observed were assumed to be the background, and the value 1.5 times the average value thereof was used as the threshold. The ratio of the number of regions exceeding 5.0 $\mu m^2$ to the total number of regions analyzed was used to determine the Co distribution.

A disk-shaped sintered body having a surface roughness Ra of 0.02 um or less, a thickness of 1 mm and a diameter of 16 mm was used as the sintered body sample.

Average crystal grain size

The average crystal grain size of the crystal grains of zirconia in the sintered body sample was measured by an intercept method.

As a preliminary treatment, the sintered body sample was mirror-polished to a surface roughness Ra of 0.02 um or less and then thermally etched. With a SEM, the surface of the sintered body sample was observed at a magnification of 15,000x to obtain a SEM observation image. From the obtained SEM observation image, 250 ± 50 zirconia crystal grains were extracted, the crystal grain size thereof was measured by the intercept method (k = 1.78), and the average thereof was assumed to be the average crystal grain size of the zirconia crystal grains.

Color tone

The color tone of the sintered body sample was measured in accordance with JIS Z 8722. In the measurement, a common colorimeter (product name: Spectrophotometer SD3000 produced by NIPPON DENSHOKU INDUSTRIES Co., Ltd.) was used and the measurement was conducted under the following conditions. Measurement method: SCE

Light source: D65
Viewing angle: 10°
Background: white

A sintered body having both surfaces mirror-polished and having a surface roughness Ra of 0.02 um or less was used as the measurement sample.

Color tone difference

The color tone of a surface of a sintered body sample having a thickness of 3 mm was determined as the color tone of the surface. The color tone of a surface (polished surface) of a sintered body sample obtained by polishing the surface of the aforementioned sintered body sample so that the thickness decreased to 2 mm was determined as the color tone of the inside. Both color tones were measured, and the color tone difference was calculated from the following equation.

$$\Delta E^* \text{ Lab} = \{(L_1^* - L_2^*)^2 + (a_1^* - a_2^*)^2 + (b_1^* - b_2^*)^2\}^{1/2}$$

In the equation above, $L_1^*$, $a_1^*$ and $b_1^*$ respectively represent L*, a* and b* of the surface of the sintered body sample having a thickness of 3 mm and $L_2^*$, $a_2^*$ and $b_2^*$ respectively represent L*, a* and b* of the surface of the sintered body sample having a thickness of 2 mm.

Biaxial flexure strength

The biaxial flexure strength of the sintered body sample was measured in accordance with ISO/DIS 6872. In the measurement, a disk-shaped sintered body sample having a diameter of 16 mm and a thickness of 1 mm was used. The measurement was conducted three times on the sintered body samples prepared under the same conditions, and the average thereof was assumed to be the biaxial flexure strength.

EXAMPLE 1

Preparation of raw material powders

An alumina powder, an iron oxide powder, a cobalt oxide powder, a titanium oxide powder and a 4 mol% yttrium-dissolved zirconia powder were weighed to an aluminum content of 2.0 mass%, an iron content of 0.4 mass%, a cobalt content of 0.2 mass%, a titanium content of 5.0 mass% and the balance being 4 mol% yttrium-dissolved zirconia. The weighed powders and an ethanol solvent were mixed and the resulting mixture was mixed in a ball mill to obtain a mixed powder. The solvent was removed from 50 g of the mixed powder in an air atmosphere at 110°C, the resulting mixed powder was sifted through a screen having 500 um openings to obtain a powder having a particle size of 500 um or less, and this powder was used as a raw material powder.

The raw material powder was uniaxially pressed at a pressure of 50 MPa and was then subjected to cold isostatic pressing at a pressure of 200 MPa to obtain a columnar green body having a diameter of 20 mm and a thickness of 4.3 mm. The green body was placed in an alumina crucible and preliminarily sintered under the following conditions to obtain a pre-sintered body.

Preliminary sintering method: normal pressure sintering
Preliminary sintering atmosphere: air atmosphere
Preliminary sintering temperature: 1350°C
Preliminary sintering time: 2 hours

The time required for elevating and decreasing the temperature during the preliminary sintering was 21 hours in total.

After the pre-sintered body was placed in a carbon crucible equipped with a lid, the carbon crucible was placed in a HIP device (product name: Dr. HIP produced by KOBE STEEL, LTD.) equipped with a carbon heater as a heating element and a carbon heat insulator as a heat insulator.

The pre-sintered body was then subjected to HIP in a weakly reducing atmosphere under the following conditions to obtain a HIP-processed body.

    HIP process temperature: 1500°C
    HIP process time: 1 hour
    HIP process pressure: 150 MPa
    Pressure medium: argon gas (purity: 99.9%)

The time required for elevating the pressure and elevating and decreasing the temperature during the HIP process was 6.5 hours in total.

The obtained HIP-processed body was heat-treated under the following conditions to obtain a 4 mol% yttrium-dissolved zirconia sintered body containing alumina, iron, cobalt and titanium in which the aluminum content was 2.0 mass%, the iron content was 0.4 mass%, the cobalt content was 0.2 mass% and the titanium content was 5.0 mass%. This sintered body was used as the sintered body of Example 1.

    Heat treatment method: normal pressure firing
    Heat treatment atmosphere: air atmosphere
    Heat treatment process temperature: 900°C
    Heat treatment time: 1 hour

The time required for elevating and decreasing the temperature during the heat treatment was 13.5 hours in total.

The total time required for the preliminary sintering step, the sintering step and the heat treatment step, in other words, a total time from elevating the temperature in the preliminary sintering step to the decreasing the temperature in the heat treatment step, was 45 hours.

The sintered body of this example had tetragonal zirconia as the main phase of the crystal phase, an Fe/Co ratio of 2.00, a Ti ratio of 8.3, a monoclinic ratio of 1.0%, an average crystal grain size of 1.6 um, a Co distribution of 27.7% and a biaxial flexure strength of 1020 MPa.

EXAMPLE 2

A 4 mol% yttrium-dissolved zirconia sintered body containing alumina, iron, cobalt and titanium in which the aluminum content was 2.0 mass%, the iron content was 0.53 mass%, the cobalt content was 0.27 mass% and the titanium content was 4.5 mass% was obtained as in Example 1 except that the alumina powder, the iron oxide powder, the cobalt oxide powder, the titanium oxide powder and the 4 mol% yttrium-dissolved zirconia powder were weighed to an aluminum content of 2.0 mass%, an iron content of 0.53 mass%, a cobalt content of 0.27 mass% and a titanium content of 4.5 mass%. This sintered body was used as the sintered body of Example 2.

The sintered body of this example had tetragonal zirconia as the main phase of the crystal phase, an Fe/Co ratio of 1.96, a Ti ratio of 5.6, a monoclinic ratio of 1.5%, an average crystal grain size of 1.4 um and a biaxial flexure strength of 1005 MPa.

EXAMPLE 3

A 4 mol% yttrium-dissolved zirconia sintered body containing alumina, iron, cobalt and titanium in which the aluminum content was 2.0 mass%, the iron content was 0.4 mass%, the cobalt content was 0.2 mass% and the titanium content was 4.5 mass% was obtained as in Example 1 except that the alumina powder, the iron oxide powder, the cobalt oxide powder, the titanium oxide powder and the 4 mol% yttrium-dissolved zirconia powder were weighed to an aluminum content of 2.0 mass%, an iron content of 0.4 mass%, a cobalt content of 0.2 mass% and a titanium content of 4.5 mass%. This sintered body was used as the sintered body of Example 3.

The sintered body of this example had tetragonal zirconia as the main phase of the crystal phase, an Fe/Co ratio of 2.00, a Ti ratio of 7.5, a monoclinic ratio of 1.1%, an average crystal grain size of 1.6 um, a Co distribution of 37.4% and a biaxial flexure strength of 1010 MPa.

EXAMPLE 4

A 4 mol% yttrium-dissolved zirconia sintered body containing alumina, iron, cobalt and titanium in which the aluminum content was 2.0 mass%, the iron content was 0.31 mass%, the cobalt content was 0.15 mass% and the titanium content was 4.5 mass% was obtained as in Example 1 except that a cobalt ferrite powder was used instead of the iron oxide powder and the cobalt oxide powder, that the alumina powder, the cobalt ferrite powder, the titanium oxide powder and the 4 mol% yttrium-dissolved zirconia powder were weighed to an aluminum content of 2.0 mass%, a cobalt ferrite content of 0.46 mass% and a titanium content of 4.5 mass% and that the HIP process temperature was changed to 1550°C. This sintered body was used as the sintered body of Example 4. The time required for elevating the pressure and elevating and decreasing the temperature during the HIP process was 6.6 hours in total and the time required for elevating and decreasing the temperature in the heat treatment step was 13.6 hours in total.

The sintered body of this example had tetragonal zirconia as the main phase of the crystal phase, an Fe/Co ratio of 2.07, a Ti ratio of 9.8, a monoclinic ratio of 1.2%, an average crystal grain size of 2.2 um, a Co distribution of 1.0% and a biaxial flexure strength of 1300 MPa.

EXAMPLE 5

A 4 mol% yttrium-dissolved zirconia sintered body containing alumina, iron, cobalt and titanium in which the aluminum content was 2.0 mass%, the iron content was 0.41 mass%, the cobalt content was 0.21 mass% and the titanium content was 4.5 mass% was obtained as in Example 1 except that a cobalt ferrite powder was used instead of the iron oxide powder and the cobalt oxide powder, that the alumina powder, the cobalt ferrite powder, the titanium oxide powder and the 4 mol% yttrium-dissolved zirconia powder were weighed to an aluminum content of 2.0 mass%, a cobalt ferrite content of 0.62 mass% and a titanium content of 4.5 mass% and that the HIP process temperature was changed to 1550°C. This sintered body was used as the sintered body of Example 5. The time required for elevating the pressure and elevating and decreasing the temperature during the HIP process was 6.6 hours in total and the time required for elevating and decreasing the temperature in the heat treatment step was 13.6 hours in total.

The sintered body of this example had tetragonal zirconia as the main phase of the crystal phase, an Fe/Co ratio of 1.95, a Ti ratio of 7.3, a monoclinic ratio of 1.2%, an average crystal grain size of 2.2 um, a Co distribution of 17.5% and a biaxial flexure strength of 1190 MPa.

EXAMPLE 6

A 4 mol% yttrium-dissolved zirconia sintered body containing alumina, iron, cobalt and titanium in which the aluminum content was 2.0 mass%, the iron content was 0.54 mass%, the cobalt content was 0.27 mass% and the titanium content was 4.5 mass% was obtained as in Example 1 except that a cobalt ferrite powder was used instead of the iron oxide powder and the cobalt oxide powder, that the alumina powder, the cobalt ferrite powder, the titanium oxide powder and the 4 mol% yttrium-dissolved zirconia powder were weighed to an aluminum content of 2.0 mass%, a cobalt ferrite content of 0.81 mass% and a titanium content of 4.5 mass% and that the HIP process temperature was changed to 1550°C. This sintered body was used as the sintered body of Example 6. The time required for elevating the pressure and elevating and decreasing the temperature during the HIP process was 6.6 hours in total and the time required for elevating and decreasing the temperature in the heat treatment step was 13.6 hours in total.

The sintered body of this example had tetragonal zirconia as the main phase of the crystal phase, an Fe/Co ratio of 2.00, a Ti ratio of 5.6, a monoclinic ratio of 1.6%, an average crystal grain size of 2.2 um, a Co distribution of 38.2% and a biaxial flexure strength of 1030 MPa.

COMPARATIVE EXAMPLE 1

A 3 mol% yttrium-dissolved zirconia sintered body containing alumina, iron, cobalt and titanium in which the aluminum content was 0.25 mass%, the iron content was 0.16 mass%, the cobalt content was 0.04 mass% and the titanium content was 3.0 mass% was obtained as in Example 1 except that the alumina powder, the iron oxide powder, the cobalt oxide powder, the titanium oxide powder and a 3 mol% yttrium-dissolved zirconia powder were weighed to an aluminum content of 0.25 mass%, an iron content of 0.16 mass%, a cobalt content of 0.04 mass% and a titanium content of 3.0 mass%. This sintered body was used as the sintered body of Comparative Example 1.

COMPARATIVE EXAMPLE 2

A 4 mol% yttrium-dissolved zirconia sintered body containing alumina, iron, cobalt and titania in which the aluminum content was 2.0 mass%, the iron content was 0.27 mass%, the cobalt content was 0.13 mass% and the titanium content was 2.0 mass% was obtained as in Example 1 except that the alumina powder, the iron oxide powder, the cobalt oxide powder, the titanium oxide powder and the 4 mol% yttrium-dissolved zirconia powder were weighed to an aluminum content of 2.0 mass%, an iron content of 0.27 mass%, a cobalt content of 0.13 mass% and a titanium content of 2.0 mass%. This sintered body was used as the sintered body of Comparative Example 2.

COMPARATIVE EXAMPLE 3

A 4 mol% yttrium-dissolved zirconia sintered body containing alumina, iron, cobalt and titania in which the aluminum content was 4.0 mass%, the iron content was 0.27 mass%, the cobalt content was 0.13 mass% and the titanium content was 4.0 mass% was obtained as in Example 1 except that the alumina powder, the iron oxide powder, the cobalt oxide powder, the titanium oxide powder and the 4 mol% yttrium-dissolved zirconia powder were weighed to an aluminum content of 4.0 mass%, an iron content of 0.27 mass%, a cobalt content of 0.13 mass% and a titanium content of 4.0 mass%. This sintered body was used as the sintered body of Comparative Example 3.

The results of Examples and Comparative Examples are indicated in the table below.

Table

| | Composition | | | | | Surface color tone | | | Color tone difference $\Delta E^*$ |
|---|---|---|---|---|---|---|---|---|---|
| | $Al_2O_3$ [wt%] | $Fe_2O_3$ [wt%] | $Co_3O_4$ [wt%] | $TiO_2$ [wt%] | $Y_2O_3$ [mol%] | $L^*$ | $a^*$ | $b^*$ | |
| Example 1 | 2.0 | 0.40 | 0.20 | 5.0 | 4.0 | 1.85 | 0.22 | 0.33 | 2.7 |
| Example 2 | 2.0 | 0.53 | 0.27 | 4.5 | 4.0 | 1.98 | 0.35 | 0.32 | 3.1 |
| Example 3 | 2.0 | 0.40 | 0.20 | 4.5 | 4.0 | 1.52 | 0.09 | 0.05 | 2.1 |
| Example 4 | 2.0 | 0.31 | 0.15 | 4.5 | 4.0 | 3.01 | 1.06 | 1.11 | 3.2 |
| Example 5 | 2.0 | 0.41 | 0.21 | 4.5 | 4.0 | 2.00 | 0.84 | 0.24 | 2.9 |
| Example 6 | 2.0 | 0.54 | 0.27 | 4.5 | 4.0 | 1.79 | 0.68 | 0.55 | 2.8 |
| Comparative Example 1 | 0.25 | 0.16 | 0.04 | 3.0 | 3.0 | 1.46 | 0.18 | 0.18 | 5.0 |
| Comparative Example 2 | 2.0 | 0.27 | 0.13 | 2.0 | 4.0 | 3.71 | 0.74 | 1.06 | 7.7 |
| Comparative Example 3 | 4.0 | 0.27 | 0.13 | 4.0 | 4.0 | 9.64 | 1.26 | 3.16 | 7.7 |

All of the sintered bodies of Examples can be confirmed as pitch-black zirconia sintered bodies that exhibit a pitch-black color. Furthermore, while the color tone difference of Examples was grade-A tolerance of 3.2 or less, no difference could be found by visual observation. This confirms that a sintered body with a grade-A tolerance color tone difference can be obtained within the length of time similar to the time required for a typical sintering step. The sintered bodies of Examples were each fired in an air atmosphere at 800°C for 1 hour. As a result, there was no increase in the mass of the sintered bodies before and after firing, and titanium contained in the sintered bodies of Examples could be confirmed to be tetravalent titanium ($Ti^{4+}$).

Compared to the sintered body of Example 3, the sintered body of Example 1 has a higher titanium content and a lower Co distribution. This confirms accelerated diffusion of the coloring components. Furthermore, Examples 4 to 6 confirm that the color tone difference tends to decrease with the increase in the coloring component content.

Meanwhile, the color tone difference in the sintered body of Comparative Example 1 was of grade-B tolerance, and visual comparison of separated samples confirmed that the color tone was different between the surface and the inside. Comparative Examples could confirm that a sintered body with a grade-A tolerance color tone difference cannot be obtained by a typical production method that involves a typical sintering step that lasts for about the same length of time. Furthermore, Comparative Example 2 with a lower titanium content than in Examples confirms that the color tone difference between the surface and the inside is large.

COMPARATIVE EXAMPLE 4

A 3 mol% yttrium-dissolved zirconia sintered body containing alumina, iron, cobalt and titanium in which the aluminum content was 0.25 mass%, the iron content was 0.16 mass%, the cobalt content was 0.04 mass% and the titanium content was 3.0 mass% was obtained as in Comparative Example 1 except that the total time required for the preliminary sintering step, the sintering step and the heat treatment step was changed to 58.5 hours by slowing the temperature elevation in the sintering step. This sintered body was used as the sintered body of Comparative Example 4.

The sintered body of Comparative Example 4 had the same color tone as Comparative Example 1, and suppression of the color tone difference was limited despite the extended sintering time.

The entire contents of the description, the claims, and the abstract of Japanese Patent Application No. 2022-042765 filed in the Japanese Patent Office on March 17, 2022 are incorporated herein by reference.

## Claims

1. A sintered body comprising:

   zirconia;
   iron;
   cobalt; and
   titanium,
   wherein a total iron and cobalt content is more than 0.1 mass% and less than 3 mass% and a titanium content is more than 3 mass%.

2. The sintered body according to Claim 1, wherein a mass ratio of an iron content to a cobalt content is less than 4.

3. The sintered body according to Claim 1 or 2, wherein the iron and the cobalt are contained as a solid solution containing iron and cobalt.

4. The sintered body according to any one of Claims 1 to 3, wherein the zirconia contains at least one element selected from the group consisting of yttrium (Y), calcium (Ca) and magnesium (Mg).

5. The sintered body according to Claim 4, wherein the zirconia contains more than 3 mol% and 10 mol% or less of the at least one element selected from the group consisting of yttrium (Y), calcium (Ca) and magnesium (Mg).

6. The sintered body according to any one of Claims 1 to 5, further comprising alumina.

7. The sintered body according to any one of Claims 1 to 6, wherein a ratio of cobalt regions exceeding 5.0 $\mu m^2$ in an element map obtained with an electron probe microanalyzer under conditions below is 55% or less:

   Measurement method: wavelength-dispersive
   Accelerating voltage: 15 kV
   Irradiation current: 300 nA
   Analysis area: 51.2 um $\times$ 51.2 um
   Number of fields of view: 3 to 5
   Measurement sample: sintered body with surface roughness (Ra) $\leq$ 0.02 um

8. The sintered body according to any one of Claims 1 to 7, wherein the zirconia has an average crystal grain size of 1.2 um or more and 2.5 um or less.

9. The sintered body according to any one of Claims 1 to 8, wherein the sintered body has a biaxial flexure strength of 1000 MPa or more and 1350 MPa or less as measured from a 1 mm-thick sample in accordance with ISO/DIS 6872.

10. The sintered body according to any one of Claims 1 to 9, wherein, a color tone of the sintered body in a L*a*b* color space has a lightness L* of 10 or less, a chromaticity a* of -2.00 or more and 2.00 or less and a chromaticity b* of -2.00 or more and 5.00 or less.

11. A method for producing the sintered body according to any one of Claims 1 to 10, the method comprising: a sintering step of sintering, in a reducing atmosphere, a green body that contains an iron source, a cobalt source, a titanium source and zirconia in which a total iron and cobalt content is more than 0.1 mass% and less than 3 mass% and a titanium content is more than 3 mass%.

12. The method according to Claim 11, wherein the sintering is carried out by pressure sintering.

13. The method according to Claim 12, further comprising, before the sintering step, a preliminary sintering step of obtaining a pre-sintered body by sintering the green body in a non-reducing atmosphere.

**14.** The method according to any one of Claims 11 to 13, further comprising a heat treatment step of heat-treating the sintered body, which has been obtained in the sintering step, in an oxidizing atmosphere at 650°C or higher and 1100°C or lower.

**15.** A member comprising the sintered body according to any one of Claims 1 to 10.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 831 798 A1 (TOSOH CORP [JP]) 9 June 2021 (2021-06-09) | 1-8, 10-15 | INV. C04B35/486 C04B35/645 |
| Y | * whole document - see the examples and the claims - in particular claim 1 + claim 7 ; claims 10-14; para.[0011], [0056]-[0060] & [0074] * ----- | 1-15 | |
| X | EP 3 950 638 A1 (TOSOH CORP [JP]) 9 February 2022 (2022-02-09) | 1-15 | |
| Y | * examples 4-11; examples 20-23 ; Synthesis Example 2 -para.[0160]-[0161] * ----- | 1-15 | |

TECHNICAL FIELDS SEARCHED (IPC)

C04B

The present search report has been drawn up for all claims

| Place of search | Date of completion of the search | Examiner |
|---|---|---|
| Munich | 3 August 2023 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1768

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | Publication date | Patent family member(s) | | Publication date |
|---|---|---|---|---|---|
| EP 3831798 | A1 | 09-06-2021 | CN | 112424145 A | 26-02-2021 |
| | | | EP | 3831798 A1 | 09-06-2021 |
| | | | JP | 2020023431 A | 13-02-2020 |
| | | | KR | 20210037612 A | 06-04-2021 |
| | | | US | 2021300828 A1 | 30-09-2021 |
| | | | WO | 2020027195 A1 | 06-02-2020 |
| EP 3950638 | A1 | 09-02-2022 | CN | 113631531 A | 09-11-2021 |
| | | | EP | 3950638 A1 | 09-02-2022 |
| | | | JP | 2021121576 A | 26-08-2021 |
| | | | KR | 20210142629 A | 25-11-2021 |
| | | | US | 2022162127 A1 | 26-05-2022 |
| | | | WO | 2020196505 A1 | 01-10-2020 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006342036 A
- JP 7291630 A
- JP 2007308338 A
- JP 2020023431 A
- JP 2022042765 A